# EUROPEAN PATENT APPLICATION

(11) **EP 4 679 324 A1**
(43) Date of publication of application: **14.01.2026**
(21) Application number: 24219587.3
(22) Date of filing: 12.12.2024
(51) Int. Cl.: G06N 3/045, G06F 8/61, G06F 8/658, G06F 9/06, G06N 3/0464, G06N 3/0985

(54) **SYSTEM AND METHOD FOR CONSTRUCTING CONTAINER IMAGE LAYERS BASED ON NEURAL NETWORK MODEL LAYERS**

(30) Priority: 09.07.2024 US 202418767013
(71) Applicant: Red Hat, Inc., Raleigh, NC 27601 (US)
(72) Inventor: TANG, Yuan, Raleigh, 27601 (US)
(74) Representative: Murgitroyd & Company

(57) **Abstract**

A plurality of model layers of a machine-learned model can be grouped to obtain a plurality of model layer groupings based on one or more grouping criteria. For each model layer grouping of the plurality of model layer groupings, mapping information can be generated that maps the model layer grouping to a corresponding container image layer of a plurality of container image layers of a container image. Based on the mapping information, the model layer grouping can be stored to the corresponding container image layer of the plurality of container image layers of the container image.

## Description

### TECHNICAL FIELD

The invention relates to a method and system for grouping model layers of a machine-learned model and generating mapping information.

### BACKGROUND

Machine-learned models can include a variety of different model layers. Neural networks, which are a subset of machine-learned models, consist of interconnected nodes, or "neurons," arranged in layers that process data by transforming the input through a series of weighted connections. These networks are designed to recognize patterns and relationships in data, making them powerful tools for tasks like image recognition, natural language processing, and predictive analytics. Neural networks learn from data through a process called training, where weights of connections between the layers of the model are adjusted based on the error of their predictions, thus improving performance.

A typical neural network consists of three main types of layers: the input layer, hidden layers, and the output layer. The input layer receives the raw data and passes it to the first hidden layer. Hidden layers, which can be numerous, perform complex computations and transformations on the data. Each neuron in a hidden layer receives input from the previous layer, processes it using an activation function, and passes the result to the next layer. The output layer produces the final prediction or classification. The depth (number of layers) and width (number of neurons per layer) of a neural network can significantly impact its ability to model complex patterns and relationships in the data.

### SUMMARY

Layers of a machine-learned model can be grouped based on grouping criteria. Each grouping of model layers can be mapped and stored to a separate image layer of a container image. If model layers receive updates via training or fine-tuning, the container image can be updated by modifying specific image layers that store the model layers being updated, rather than replacing the container image entirely.

According to a first aspect of the disclosure, there is provided a method comprising: grouping, by a computing system comprising one or more processor devices, a plurality of model layers of a machine-learned model to obtain a plurality of model layer groupings based on one or more grouping criteria, and, for each model layer grouping of the plurality of model layer groupings: generating, by the computing system, mapping information that maps the model layer grouping to a corresponding container image layer of a plurality of container image layers of a container image; and, based on the mapping information, storing, by the computing system, the model layer grouping to the corresponding container image layer of the plurality of container image layers of the container image.

The method may further comprise: obtaining, by the computing system, optimization information descriptive of parameter modifications for one or more fine-tuned model layers of the plurality of model layers of the machine-learned model; and applying, by the computing system, the parameter modifications to the one or more fine-tuned model layers of the plurality of model layers of the machine-learned model. The optimization information may be further descriptive of one or more modifications to a configuration of the machine-learned model.

The method may further comprise identifying, by the computing system, a set of container image layers from the plurality of container image layers, wherein each of the set of container image layers comprises at least one fine-tuned model layer of the one or more fine-tuned model layers. Obtaining the optimization information descriptive of the parameter modifications may comprise: providing, by the computing system, the container image to a computing device; and obtaining, by the computing system from the computing device, the optimization information descriptive of the parameter modifications for the one or more fine-tuned model layers of the plurality of model layers of the machine-learned model. The method may further comprise: updating, by the computing system, each container image layer of the set of container image layers based on the optimization information; and providing, by the computing system, the set of container image layers to the computing device.

The one or more grouping criteria may comprise a model layer type criteria, and grouping the plurality of model layers of the machine-learned model to obtain the plurality of model layer groupings may comprise: determining, by the computing system, a model layer type for each model layer of the machine-learned model; and grouping, by the computing system, the plurality of model layers based on the model layer type of each of the plurality of model layers to obtain the plurality of model layer groupings. The model layer type may comprise: a self-attention layer type; a convolutional layer type; a normalization layer type; an activation layer type; or a hidden layer type.

The one or more grouping criteria may comprise a computational complexity criteria, and grouping the plurality of model layers of the machine-learned model to obtain the plurality of model layer groupings may comprise: determining, by the computing system, a degree of computational complexity associated with each model layer of the machine-learned model; and grouping, by the computing system, the plurality of model layers based on the degree of computational complexity associated with each of the plurality of model layers to obtain the plurality of model layer groupings.

The machine-learned model may comprise a neural network.

According to a second aspect of the disclosure, a computing system is provided comprising one or more processor devices configured to carry out the method of the first aspect. The computing system may include a memory, and one or more processor devices coupled to the memory, configured to: group a plurality of model layers of a machine-learned model to obtain a plurality of model layer groupings based on one or more grouping criteria; and, for each model layer grouping of the plurality of model layer groupings: generate mapping information that maps the model layer grouping to a corresponding container image layer of a plurality of container image layers of a container image, and, based on the mapping information, store the model layer grouping to the corresponding container image layer of the plurality of container image layers of the container image.

The processor devices may be further configured to: obtain optimization information descriptive of parameter modifications for one or more fine-tuned model layers of the plurality of model layers of the machine-learned model; and apply the parameter modifications to the one or more fine-tuned model layers of the plurality of model layers of the machine-learned model. The optimization information may be further descriptive of one or more modifications to a configuration of the machine-learned model.

The processor devices may be further configured to identify a set of container image layers from the plurality of container image layers, wherein each of the set of container image layers comprises at least one fine-tuned model layer of the one or more fine-tuned model layers. The processor devices may be configured to obtain the optimization information descriptive of the parameter modifications by: providing the container image to a computing device; and obtaining, from the computing device, the optimization information descriptive of the parameter modifications for the one or more fine-tuned model layers of the plurality of model layers of the machine-learned model. The processor devices may be further configured to: update each container image layer of the set of container image layers based on the optimization information; and provide the set of container image layers to the computing device.

The one or more grouping criteria may comprise a model layer type criteria, and the processor devices may be configured to group the plurality of model layers of the machine-learned model to obtain the plurality of model layer groupings by: determining a model layer type for each model layer of the machine-learned model; and grouping the plurality of model layers based on the model layer type of each of the plurality of model layers to obtain the plurality of model layer groupings. The model layer type may comprise: a self-attention layer type; a convolutional layer type; a normalization layer type; an activation layer type; or a hidden layer type.

The one or more grouping criteria may comprise a computational complexity criteria, and the processor devices may be configured to group the plurality of model layers of the machine-learned model to obtain the plurality of model layer groupings by: determining a degree of computational complexity associated with each model layer of the machine-learned model; and grouping the plurality of model layers based on the degree of computational complexity associated with each of the plurality of model layers to obtain the plurality of model layer groupings.

The machine-learned model may comprise a neural network.

According to a third aspect of the disclosure, a non-transitory computer-readable storage medium is provided. The non-transitory computer-readable storage medium includes executable instructions that when executed cause one or more processor devices to carry out the method of the first aspect. The instructions may cause a processor device to: group a plurality of model layers of a machine-learned model to obtain a plurality of model layer groupings based on one or more grouping criteria; and, for each model layer grouping of the plurality of model layer groupings: generate mapping information that maps the model layer grouping to a corresponding container image layer of a plurality of container image layers of a container image; and, based on the mapping information, store the model layer grouping to the corresponding container image layer of the plurality of container image layers of the container image.

The instructions may further cause the processor device to apply parameter modifications to one or more model layers of the plurality of model layers of the machine-learned model to obtain one or more fine-tuned model layers. The instructions further cause the processor device to provide update information to a computing device, wherein the update information comprises the one or more fine-tuned model layers and instructions to update a container image previously requested by the computing device with the one or more fine-tuned model layers.

The instructions may further cause the processor device to: obtain optimization information descriptive of parameter modifications for one or more fine-tuned model layers of the plurality of model layers of the machine-learned model; and apply the parameter modifications to the one or more fine-tuned model layers of the plurality of model layers of the machine-learned model. The optimization information may be further descriptive of one or more modifications to a configuration of the machine-learned model.

The instructions may further cause the processor device to identify a set of container image layers from the plurality of container image layers, wherein each of the set of container image layers comprises at least one fine-tuned model layer of the one or more fine-tuned model layers. The instructions may cause the processor device to obtain the optimization information descriptive of the parameter modifications by: providing the container image to a computing device; and obtaining, from the computing device, the optimization information descriptive of the parameter modifications for the one or more fine-tuned model layers of the plurality of model layers of the machine-learned model. The instructions may further cause the processor device to: update each container image layer of the set of container image layers based on the optimization information; and provide the set of container image layers to the computing device.

The one or more grouping criteria may comprise a model layer type criteria, and the instructions may cause the processor device to group the plurality of model layers of the machine-learned model to obtain the plurality of model layer groupings by: determining a model layer type for each model layer of the machine-learned model; and grouping the plurality of model layers based on the model layer type of each of the plurality of model layers to obtain the plurality of model layer groupings. The model layer type may comprise: a self-attention layer type; a convolutional layer type; a normalization layer type; an activation layer type; or a hidden layer type.

The one or more grouping criteria may comprise a computational complexity criteria, and the instructions may cause the processor device to group the plurality of model layers of the machine-learned model to obtain the plurality of model layer groupings by: determining a degree of computational complexity associated with each model layer of the machine-learned model; and grouping the plurality of model layers based on the degree of computational complexity associated with each of the plurality of model layers to obtain the plurality of model layer groupings.

The machine-learned model may comprise a neural network.

Individuals will appreciate the scope of the disclosure and realize additional aspects thereof after reading the following detailed description of the examples in association with the accompanying drawing figures.

### BRIEF DESCRIPTION OF THE DRAWINGS

The accompanying drawing figures incorporated in and forming a part of this specification illustrate several aspects of the disclosure and, together with the description, serve to explain the principles of the disclosure.
Figure 1A is a block diagram of a computing environment with systems and devices for constructing container image layers based on neural network model layers according to some implementations of the present disclosure.
Figure 1B is a block diagram of a container layer constructor for updating layers of a container image layers based on updates to layers of a machine-learned model stored to the container image layers according to some implementations of the present disclosure.
Figure 2 is a flowchart illustrating operations performed by the computing device of Figure 1A for constructing container image layers based on neural network model layers, according to one example.
Figure 3 is a flowchart for a method for constructing container image layers based on neural network model layers according to some implementations of the present disclosure.
Figure 4 is a block diagram of the computing device of Figure 1A for constructing container image layers based on machine-learned model layers, according to one example.
Figure 5 is a block diagram of the computing system suitable for implementing examples according to one example.

### DETAILED DESCRIPTION

The examples set forth below represent the information to enable individuals to practice the examples and illustrate the best mode of practicing the examples. Upon reading the following description in light of the accompanying drawing figures, individuals will understand the concepts of the disclosure and will recognize applications of these concepts not particularly addressed herein. It should be understood that these concepts and applications fall within the scope of the disclosure and the accompanying claims.

Any flowcharts discussed herein are necessarily discussed in some sequence for purposes of illustration, but unless otherwise explicitly indicated, the examples and claims are not limited to any particular sequence or order of steps. The use herein of ordinals in conjunction with an element is solely for distinguishing what might otherwise be similar or identical labels, such as "first message" and "second message," and does not imply an initial occurrence, a quantity, a priority, a type, an importance, or other attribute, unless otherwise stated herein. The term "about" used herein in conjunction with a numeric value means any value that is within a range of ten percent greater than or ten percent less than the numeric value. As used herein and in the claims, the articles "a" and "an" in reference to an element refers to "one or more" of the element unless otherwise explicitly specified. The word "or" as used herein and in the claims is inclusive unless contextually impossible. As an example, the recitation of A or B means A, or B, or both A and B. The word "data" may be used herein in the singular or plural depending on the context. The use of "and/or" between a phrase A and a phrase B, such as "A and/or B" means A alone, B alone, or A and B together.

Machine-learned models consist of a variety of different model layers. Neural networks, which are a subset of machine-learned models, consist of interconnected nodes, or "neurons," arranged in layers that process data by transforming the input through a series of weighted connections. These networks are designed to recognize patterns and relationships in data, making them powerful tools for tasks like image recognition, natural language processing, and predictive analytics.

A typical machine-learned model consists of three main types of layers: the input layer, hidden layers, and the output layer. The input layer receives the raw data and passes it to the first hidden layer. Hidden layers, which can be numerous, perform complex computations and transformations on the data. Each unit in a hidden layer receives input from the previous layer, processes it using an activation function, and passes the result to the next layer. The output layer produces the final prediction or classification. The depth (number of layers) and width (number of neurons per layer) of a machine-learned model can significantly impact its ability to model complex patterns and relationships in the data.

Machine-learned models learn from data through a process called training, where the weights of connections between the layers of the model are adjusted based on the error of their predictions, thus improving performance. For example, assume that a machine-learned model is being trained to recognize objects depicted in images. A training image can be provided to the model as input, and the model can output a label describing an object depicted by the training image. A loss function can be used to evaluate a difference between the output label and the ground-truth label, and a learning technique (e.g., backpropagation, etc.) can be used to update parameters of the model based on the loss function.

In particular, learning techniques are fundamental to identifying which parameters of a model should be adjusted (and to what degree). To follow the previous example, once an error is identified by the loss function, backpropagation can be used to propagate the error back through the network. The backpropagation algorithm can calculate the gradient of the loss function with respect to each parameter, thus enabling the parameters to be updated in a direction that minimizes the loss.

Although each parameter of a model may be updated a number of times during a training session involving a large quantity of training examples, only a subset of the model parameters are usually updated for each individual training example. The quantity of model parameters that are updated for each training iteration is further reduced for fine-tuning or "optimization" training processes. Fine-tuning, or "optimization" training, refers to additional training iterations applied to a model after the initial training for the model is complete. Fine-tuning is generally used to tune a model towards a specific task or output format. For example, a trained Large Language Model (LLM) may be fine-tuned or optimized for a particular user based on writing samples from the user. As such, it is relatively common for a fine-tuning training iteration to cause updates to only a few of the model parameters.

Recent virtualization technologies have attempted to store machine-learned models as container images. As described herein, container images refer to lightweight executable software packages that include components needed to run software, such as code, runtime, libraries, and system tools. Containers can be instantiated from container images, and serve as isolated environments that ensure consistent behavior of applications across different computing environments. Container images are built using scripts that include sets of instructions that outline the steps to set up the software and its dependencies. Once built, container images can be stored in container registries and deployed on any platform that supports containerization.

Generally, it can be faster or more efficient to extract a machine-learned model from container images than to extract the model from cloud storage systems. This is because models extracted from cloud storage systems must be extracted from scratch each time, while container images include layers that can leverage cache memory to increase extraction speed. However, when building a container image that includes a machine-learned model, conventional containerization mechanisms generally store the model in a single layer of the container image.

The approach outlined above can be sufficient in instances where the model receives no further updates. However, if the model stored to a container image needs to be updated for any reason (e.g., fine-tuning, optimization, etc.), the model must be stored as a completely new layer without regard for which layers of the model received updates. Due to the expensive computational cost associated with creating a container image from scratch, this can be substantially inefficient. Thus, the capability to update models stored to container images without creating a new container image is greatly desired.

Accordingly, implementations described herein propose systems and methods for constructing container image layers based on neural network model layers. In particular, a computing system (e.g., a system associated with a cloud services provider, virtualization services provider, etc.) can obtain a trained machine-learned model that includes a plurality of model layers. The computing system can group the model layers to obtain a plurality of model groupings based on grouping criteria (e.g., a model layer type, a type of computing resource required for the layer, a size of the layer, an order of the layer, a probability that the layer will receive future updates, etc.).

The computing system can create or obtain a container image. For each model layer grouping, the computing system can generate mapping information that maps the model layer grouping to a corresponding container image layer of a plurality of container image layers of the container image. Based on the mapping information, the computing system can store the model layer grouping to the container image layer indicated by the mapping information. In this manner, the computing system can efficiently group and store layers of machine-learned model to the container, where they can be loaded from cache when a container is instantiated from the container image.

Assume that a fine-tuning process is used to generate parameter modifications for parameters included in a particular layer of the machine-learned model (also referred to as a "fine-tuned" layer). Unlike conventional approaches, which store each layer of the model in a single layer of the container, implementations described herein can identify the fine-tuned layer as the layer that includes the parameters to be modified. The parameter modifications can be applied exclusively to the fine-tuned model layer of the plurality of model layers.

Further assume that the container image was previously provided to a user device, and the fine-tuning process is performed at the user device based on personalized inputs (e.g., images captured by a user, textual content generated by a user, etc.). Unlike conventional approaches, which require the entire container image to be transmitted to the user device, the fine-tuned layer can be provided to the user device exclusively without need to redundantly transfer layers that are unmodified. In this manner, the substantial computational resource and bandwidth costs associated with re-creating and transmitting the container image to the user device can be reduced.

Aspects of the present disclosure provide a number of technical effects and benefits. Specifically, implementations described herein can substantially reduce the expenditure of bandwidth and other computational resources associated with creation and transmission of container images. For example, conventional containerization techniques store machine-learned models to containers, thus enabling the use of cache memory to improve model retrieval efficiency. However, models stored to container images using conventional techniques are stored to a single layer of the container. When stored to a single layer, individual layers of the model cannot be updated without recreating the container from scratch, which consumes substantial quantities of computing resources.

This inefficiency is exacerbated by the need to re-send the newly created container image to a requesting user device, which can require substantial bandwidth. However, implementations described herein can group and assign model layers to multiple container image layers. In turn, storing model layers to multiple container image layers obviates the need to re-create containers from scratch to apply model updates, thus substantially reducing the expenditure of computing and bandwidth resources associated with container image creation.

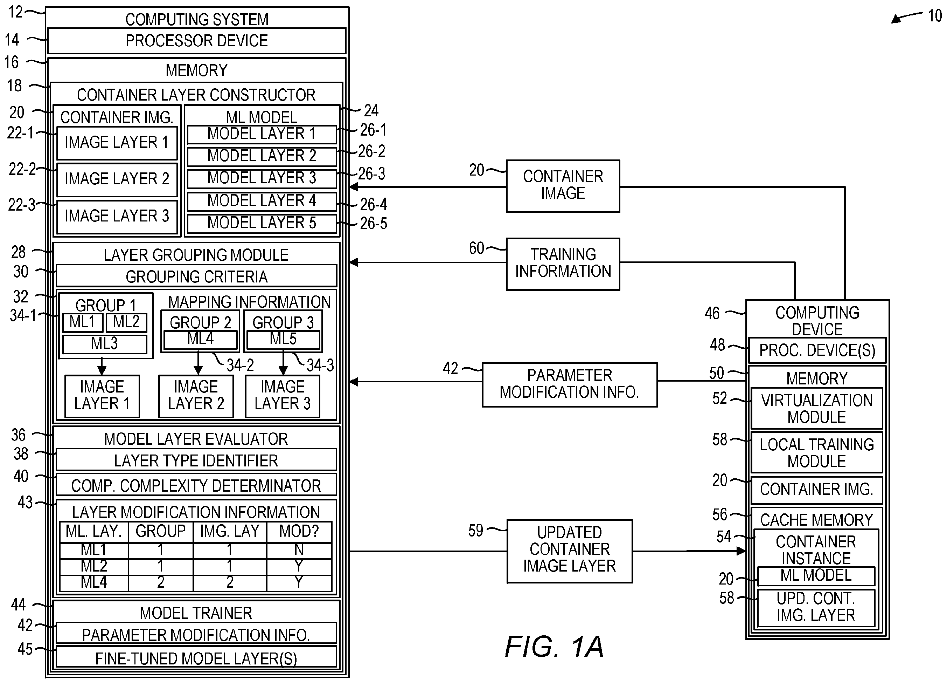

Figure 1A is a block diagram of a computing environment 10 with systems and devices for constructing container image layers based on neural network model layers according to some implementations of the present disclosure. The computing environment 10 can include a computing system 12 that includes processor device(s) 14 and a memory 16. The computing system 12 can be any type or manner of computing device or network node, and can include physical computing device(s) (e.g., Central Processing Units (CPUs), Graphics Processing Units (GPUs), memory, accelerators, virtualized device(s) or service(s), etc. For example, the computing system 12 can be a virtualized node within a cloud-based computing environment that has indirect access to computing resources through a virtualization layer.

The processor device(s) 14 of the computing system 12 may include any computing or electronic device capable of executing software instructions to implement the functionality described herein. The memory 16 of the computing system 12 can be or otherwise include any device(s) capable of storing data, including, but not limited to, volatile memory (random access memory, etc.), non-volatile memory, storage device(s) (e.g., hard drive(s), solid state drive(s), etc.). In particular, the memory 16 can include a containerized unit of software instructions (i.e., a "packaged container"). The containerized unit of software instructions can collectively form a container that has been packaged using any type or manner of containerization technique.

The containerized unit of software instructions can include one or more applications, and can further implement any software or hardware necessary for execution of the containerized unit of software instructions within any type or manner of computing environment. For example, the containerized unit of software instructions can include software instructions that contain or otherwise implement all components necessary for process isolation in any environment (e.g., the application, dependencies, configuration files, libraries, relevant binaries, etc.).

The memory 16 can include a container layer constructor 18. The container layer constructor 18 can perform various operations to facilitate construction of container images. In particular, the container layer constructor 18 can construct container images to store machine-learned models such that individual layers of the model can be updated without having to construct a new container image.

The container layer constructor 18 can obtain a container image 20. As described herein, a "container image" refers to a set of software instructions that can be executed to instantiate an instance of a particular container. The container image 20 can include a plurality of image layers 22-1 - 22-3 (generally, image layers 22). It should be noted that the container image 20 is illustrated to include three image layers only to more clearly illustrate various implementations of the present disclosure. Rather, the container image 20 can include any number of the image layers 22.

The container layer constructor 18 can include a machine-learned model 24. The machine-learned model 24 can be, or include, any type of machine-learned model(s), such as neural networks (e.g., deep neural networks) or other types of machine-learned models, including non-linear models and/or linear models. Neural networks can include feed-forward neural networks, recurrent neural networks (e.g., long short-term memory recurrent neural networks), convolutional neural networks or other forms of neural networks. Some example machine-learned models can leverage an attention mechanism such as self-attention. For example, some example machine-learned models can include multi-headed self-attention models (e.g., transformer models).

The machine-learned model 24 can include a set of model layers 26-1 - 26-5 (generally, model layers 26). The model layers 26 can include any type of model layers, such as linear layers, normalization layers, hidden layers, etc. In some implementations, the model layers 26 can be or otherwise include certain model mechanisms, such as self-attention mechanisms, cross-attention mechanisms, diffusion mechanisms, or the like. In some implementations, one or more of the model layers 26 can comprise a sub-model or specific portion of the machine-learned model 24, such as an encoder portion, decoder portion, transformer portion, etc.

In some implementations, the container layer constructor 18 can generate the container image 20 in response to obtaining the machine-learned model 24. For example, the container layer constructor 18 can identify a model type for the machine-learned model 24, and based on the model type, generate the container image 20 to store the machine-learned model 24. For another example, the container layer constructor 18 can identify the quantity of the model layers 26 included within the machine-learned model 24, and based on the number of model layers 26, generate the container image 20 with a quantity of image layers 22 sufficient to store the number of model layers 26 of the machine-learned model 24.

The container layer constructor 18 can include a layer grouping module 28. The layer grouping module 28 can group the model layers 26 of the machine-learned model 24 to obtain a plurality of model layer groupings based on grouping criteria 30. In particular, the layer grouping module 28 can analyze the grouping criteria 30, and based on the grouping criteria 30, generate mapping information 32. The mapping information 32 can identify model layer groupings 34-1 - 34-3 (generally, model layer groupings 34). Each of the model layer groupings 34 can include one or more of the model layers 26. The mapping information 32 can also map each of the model layer groupings 34 to a corresponding image layer of the image layers 22. In some implementations, the layer grouping module 28 can group each of the model layers 26 within an individual model layer grouping to establish a one-to-one mapping between model layer groupings 34 (and thus the model layers 26) to the image layers 22. Alternatively, in some implementations, the layer grouping module 28 can form a model layer grouping that include a plurality of the model layers 26.

To follow the depicted example, the layer grouping module 28 can evaluate the grouping criteria 30 to group the model layers 26 into the model layer groupings 34. The model layer grouping 34-1 can include model layers 26-1, 26-2, and 26-3. The model layer grouping 34-2 can include the include model layer 26-4. The model layer grouping 34-3 can include the model layer 26-5. The mapping information 32 can map the model layer grouping 34-1 to the image layer 22-1 of the container image 20, the model layer grouping 34-2 to the image layer 22-2, and the model layer grouping 32-3 to the image layer 22-3.

In some implementations, the layer grouping module 28 can select a quantity of the model layer groupings 34 based on the quantity of the image layers 22 of the container image 20. For example, the layer grouping module 28 can select a quantity of model layer groupings 34 that is the same as the quantity of image layers 22 so that each of the image layers 22 can be mapped to a respective grouping of the model layer groupings 34.

The grouping criteria 30 can be, or include, any characteristic of the machine-learned model 24, the model layers 26, the container image 20, the image layers 22, the computing system 12, a device receiving the container image 20, etc. Examples of the grouping criteria 30 include a layer type characteristic for the model layers 26, a computational complexity (measured or predicted) of the model layers 26, a number of image layers 22, a capacity of each of the image layers 22, etc.

The container layer constructor 18 can include a model layer evaluator 36. The model layer evaluator 36 can evaluate each of the model layers 26. In particular, the model layer evaluator 36 can include a layer type identifier 38. The layer type identifier 38 can identify a layer type for each of the model layers 26. In some implementations, the layer type identified by the layer type identifier 38 for each of the model layers 26 can be included as one of the grouping criteria 30. Additionally, or alternatively, in some implementations, the layer type identifier 38 can identify whether a model layer is an input layer, hidden layer, output layer, etc. To follow the previous example, the layer type identifier 38 may additionally or alternatively identify the model layers 26-2 and 26-3 as being hidden layers.

In some implementations, the layer grouping module 28 can group the model layers 26 based on the grouping criteria 30 to normalize the probability that one of the image layers 22 is updated. To follow the depicted example, assume that model layers 26-1 and 26-2 have a relatively low likelihood of being updated via training iterations. Further assume that model layers 26-3 - 26-5 have a relatively high likelihood of being updated via training iterations. The layer grouping module 28 can distribute the model layers 26-3 - 26-5 among the model groupings 34 so that each of the model groupings 34 has a relatively similar probability of being updated via training iterations. Alternatively, in some implementations, the layer grouping module 28 can group the model layers 26 based on the grouping criteria 30 to increase the probability that the model layers 26 mapped to some of the image layers 22 are updated while reducing the probability that the model layers 26 mapped to some other layers of the image layers 22 are updated.

The model layer evaluator 36 can include a computational complexity determinator 40. The computational complexity determinator 40 can determine a computational complexity associated with processing an input with each of the model layers 26. More specifically, the computational complexity determinator 40 can determine a type and/or quantity of computing resource(s) needed for processing an input with a particular layer (e.g., GPU resources, CPU resources, etc.). For example, assume that the model layer 26-3 is a linear layer and the model layer 26-4 is an attention layer. The computational complexity determinator 40 can determine that the computational complexity associated with processing an input with the model layer 26-3 is greater than the model layer 26-4.

In some implementations, the computational complexity determinator 40 can store information that describes a computational complexity of known types of model layers. For example, the layer type identifier 38 can identify the model layer 26-4 as an attention layer. Because attention layers are known to be relatively complex, the information can indicate that the model layer 26-4 is likely to be relatively complex. In response, the computational complexity determinator 40 can determine that the degree of computational complexity associated with the model layer 26-4 is likely to be high.

Additionally, or alternatively, in some implementations, the computational complexity determinator 40 can estimate or predict a degree of computational complexity associated with the model layers 26. For example, the computational complexity determinator 40 may predict a degree of complexity for a layer based on the number of parameters, weights, connections, etc. within the layer. For another example, the computational complexity determinator 40 may predict a degree of complexity for a layer based on a size of the input to the layer, a output of the layer, etc. For yet another example, the computational complexity determinator 40 may predict a degree of complexity for a layer based on historic performance metrics for the layer (e.g., processing latency, processing resources used previously, etc.).

In some implementations, the model layer evaluator 36 can predict a degree of likelihood that a layer will be updated due to performance of a training or fine-tuning iteration. For example, if the model layer 26-1 is an input layer with few (or none) parameters to be adjusted via training, and the model layer 26-2 is a convolutional layer with a larger number of parameters to be adjusted via training, the model layer evaluator 36 can predict that the model layer 26-1 is less likely to be updated due to future training iterations. As described previously, model layer types identified by the layer type identifier 38 and computational complexity determinations made using the computational complexity determinator 40 can be utilized as some (or all) of the grouping criteria 30.

In addition to constructing (or adding layers to) the container image 20, the container layer constructor 18 can also update specific image layers 22 of the container image 20 to apply modifications to parameters of the model layers 26 stored to the image layer 22. For example, assume that the container layer constructor 18 obtains parameter modification information 42 that describes modifications to parameters of the machine-learned model 24 based on training iteration(s). The container layer constructor 18 can identify one or more of the model layers 26 that include parameters being modified or updated based on the parameter modification information 42. The container layer constructor 18 can then identify one or more of the image layers 22 of the container image 20 that include the identified model layers. The container layer constructor 18 can update each of the one or more identified image layers by applying the modifications described by the parameter modification information 42 to the identified model layers stored to those image layer(s).

In some implementations, the computing system 12 can generate the parameter modification information 42. For example, the computing system 12 can include a model trainer 44. The model trainer 44 can perform operations to train a machine-learned model based on training examples. Specifically, the model trainer 44 can train the model using various training or learning techniques, such as, for example, backwards propagation of errors. For example, a loss function can be backpropagated through the model(s) to update one or more parameters of the model(s) (e.g., based on a gradient of the loss function). Various loss functions can be used such as mean squared error, likelihood loss, cross entropy loss, hinge loss, and/or various other loss functions. Gradient descent techniques can be used to iteratively update the parameters over a number of training iterations. In some implementations, performing backwards propagation of errors can include performing truncated backpropagation through time. The model trainer 44 can perform a number of generalization techniques (e.g., weight decays, dropouts, etc.) to improve the generalization capability of the models being trained

In some implementations, the model layer evaluator 36 can obtain layer modification information 43. The layer modification information 43 can indicate which of the image layers 22-1 are to be modified or updated based on the parameter modification information 42. Specifically, the layer modification information 43 can indicate which of the image layers 22 include one (or more) of the model layer(s) 22 that include parameters modified by the parameter modification information 42. For example, assume that the parameter modification information 42 described a modification to a parameter of the model layer 26-1. The model layer evaluator 36 can first identify that parameters of the model layer 26-1 are modified by the parameter modification information 42. The model layer evaluator 36 can then analyze the mapping information 32 to determine that the model layer 26-1 is grouped within the model layer grouping 34-1, and that the model layer grouping 34-1 is mapped to the image layer 22-1 to generate the layer modification information 43. The container layer constructor 18 can then modify or update the image layer 22-1 of the container image 20 to update the model layer 26-1 stored to the image layer 22-1 based on the parameter modification information 42.

In some implementations, the parameter modification information 42 can describe parameter modifications determined using a training process. For example, the computing system 12 can perform the model training via the model trainer 44 to obtain the parameter modification information 42. Alternatively, in some implementations, the computing system 12 can obtain the parameter modification information 42 from a computing device that utilizes and locally updates an instance of the machine-learned model 24 stored to an instance of the container image 20.

To follow the depicted example, the computing environment 10 can include a computing device 46. The computing device 46 can be any type or manner of device, such as a user device (e.g., smartphone, laptop, wearable device, etc.), network device (e.g., router, modem, network node, etc.), cloud device or system, virtualized device, etc. The computing device 46 can include processor device(s) 48 and a memory 50 as described with regards to the processor device(s) 14 and the memory 16 of the computing system 12. The memory 50 of the computing device 46 can include a virtualization module 52. The virtualization module 52 can perform or otherwise cause performance of various tasks and operations to facilitate virtualization (e.g., instantiation of containers from container images, maintenance of virtualization platforms, updating container images, etc.).

The virtualization module 52 can obtain the container image 20. For example, the virtualization module 52 may request the container image 20 from the computing system 12. The virtualization module 52 can instantiate a container instance 54 from the container image 20. Specifically, in some implementations, the virtualization module 52 can load the container instance 54 to cache memory 56 included in the memory 50. The container instance 54 can include the machine-learned model 24 as described previously. When the virtualization module 52 initially obtains the container image 20, the virtualization module 52 can obtain each of the image layers 22. The virtualization module 52 can load each of the image layers 22 into the cache memory 56 to instantiate the container instance 54 with the machine-learned model 24.

The memory 50 of the computing device 46 can include a local training module 58. The local training module can perform some (or all) of the training and/or fine-tuning processes performed by the model trainer 44 of the computing system 12. Additionally, or alternatively, in some implementations, the local training module 58 can coordinate with the model trainer 44 to offload training tasks to the model trainer 44.

For example, assume that the machine-learned model 24 is a Large Language Model (LLM) that can be fine-tuned to more accurately emulate the writing style of a particular user of the computing device 46. Further assume that a training example (e.g., textual content produced by the user or selected by the user, etc.) is obtained at the computing device 46. In some implementations, the computing device 46 can locally determine the parameter modification information 42 using the local training module 58. The computing device 46 can send the parameter modification information 42 to the computing system 12.

If the parameter modification information 42 includes modifications to the model layer 26-1, the computing system 12 can update the image layer 22-1 based on the parameter modification information 42, as the model layer 26-1 is stored to the image layer 22-1. Once updated, the computing system 12 can provide an updated image layer 59 to replace the local copy of the image layer 22-1 at the container image 20 on the computing device 46. The computing device 46 can then efficiently load the updated image layer 59 to the cache memory 56 without having to re-instantiate any other layers of the container image 20. In such fashion, implementations described herein can update container layers in an efficient and effective manner.

More specifically, the model trainer 44 can apply the parameter modification information to one or more of the model layers 26 to obtain fine-tuned model layer(s) 45. As described herein, a "fine-tuned" model layer refers to a model layer (e.g., input layer, hidden layer, output layer, etc.) with previous training that undergoes an additional training or tuning iteration to update at least one parameter or configuration (e.g., hyperparameter(s), number of parameter(s), layer architecture, etc.) of the layer.

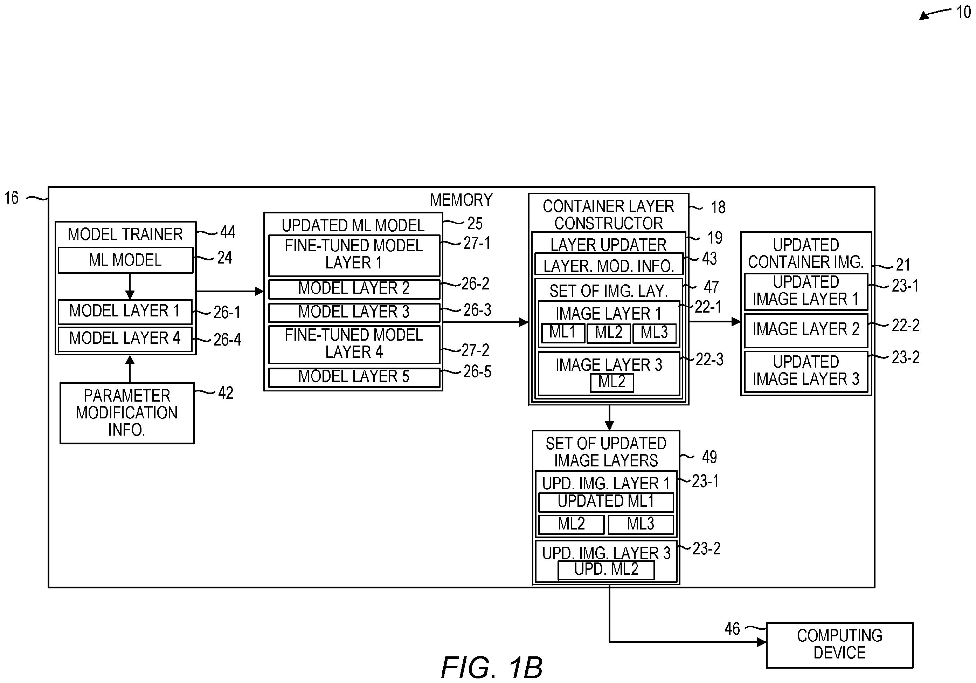

For a specific example, turning to Figure 1B, Figure 1B is a block diagram of a container layer constructor for updating layers of a container image layers based on updates to layers of a machine-learned model stored to the container image layers according to some implementations of the present disclosure. Figure 1B will be discussed in conjunction with Figure 1A. Specifically, the model trainer 44 can obtain the parameter modification information 42 that modifies some parameters of layer(s) of the model layers 26.

To follow the depicted example, the model trainer 44 can update model layer 26-1 and 26-4 based on the parameter modification information 42 to obtain an updated machine-learned model 25. The updated machine-learned model 25 can include fine-tuned model layer 27-1 and fine-tuned model layer 27-2 (generally, fine-tuned model layers 27). The fine-tuned model layer 27-1 can replace the model layer 26-1 within the updated machine-learned model 25. The fine-tuned model layer 27-2 can replace the model layer 26-4 within the updated machine-learned model 25.

The container layer constructor 18 can include a layer updater 19. The layer updater 19 can identify a set of image layers 47 from the container image 20 based on the updated machine-learned model 25. Each of the set of image layers 47 can store one (or more) of the model layers 26 that has been updated or otherwise replaced by the fine-tuned model layers 27. To follow the depicted example, the set of image layers 47 can include the image layer 22-1 because the model layer 26-1 stored to the image layer 22-1 has been replaced with the fine-tuned model layer 27-1. For another example, the set of image layers 47 can include the image layer 22-3 because the model layer 26-4 stored to the image layer 22-3 has been replaced with the fine-tuned model layer 27-2.

Specifically, the container layer constructor 18 can update the image layers 22 of the container image 20 that include fine-tuned layer(s) of the updated machine-learned model 25. To do so, the layer updater 19 can obtain the layer modification information 43 from the model layer evaluator 36. Based on the updated machine-learned model 25, the layer updater 19 can determine that model layers 26-1 and 26-4 have been updated with fine-tuned model layers 27-1 and 27-2. The layer updater 19 can analyze the layer modification information 43 to determine which layers of the container image 20 included the model layer(s) 26 that were updated with fine-tuned model layers. To follow the depicted example, the layer updater 19 can analyze the layer modification information 43 to determine that model layers 26-1 and 26-4 are stored to image layers 22-1 and 22-3 of the container image 20, respectively.

The layer updater 19 can modify the image layers that include the updated model layers to apply the model layer updates. Additionally, or alternatively, the layer updater 19 can replace the model layers stored to the image layers with the updated image layers. To follow the depicted example, the layer updater 19 can obtain an updated image layer 23-1 by modifying the image layer 22-1. The layer updater 19 can modify the image layer 22-1 by replacing the model layer 26-1 stored to the image layer 22-1 with the fine-tuned model layer 27-1. Similarly, the layer updater 19 can modify the image layer 22-3 to obtain an updated image layer 23-2 by replacing the model layer 26-4 stored to the image layer 22-3 with the fine-tuned model layer 27-2.

Each of the updated image layers 23-1 and 23-2 can be included in a set of updated image layers 49. In some implementations, the container layer constructor 18 can generate an updated container image 21 based on the set of updated image layers 49. The updated container image 21 can include the container image layers 22 that were not updated (e.g., the image layer 22-2) and the updated image layers 23-1 and 23-2. The container layer constructor 18 can store the updated container image 21 for subsequent provision to requesting computing devices.

Additionally, or alternatively, in some implementations, the container layer constructor 18 can transmit the set of updated image layers 49 to the computing device 46. For example, the computing device 46 can transmit a request to the computing system 12 that requests the container image 20. The request can indicate that the container image 20 is currently loaded to the cache memory 56 of the computing device 46. Rather than transmitting the entire updated container image 21 to the computing device 46, the container layer constructor 18 can transmit the set of updated image layers 49 to the computing device, thus substantially reducing the expenditure of computing resources.

Returning to Figure 1A, in some implementations, the computing system 12 can obtain a training example (not illustrated). In some implementations, the computing device 46 may provide the training example directly to the computing system 12. More specifically, the computing device 46 can provide training information 60 to the computing system based on training example(s) obtained locally at the computing device 46. In some implementations, the training information 60 can include the training example obtained at the computing device 46. Alternatively, in some implementations, the training information 60 can include some information derived from the training example obtained at the computing device 46 (e.g., an encoding, an intermediate representation, a portion of the training example, etc.).

Additionally, it should be noted that each of the operations described with regards to the container layer constructor 18 can also be performed based on additional training iterations performed for models, and is not limited to fine-tuning iterations performed in accordance with a computing device such as the computing device 46. For example, the parameter modification information 42 can be obtained from a training source, such as a creator or maintainer of the machine-learned model 24, or an entity that creates and/or updates machine-learned models generally. The container layer constructor 18 can then update particular layers of the image layers 22 as described previously. If the container image 20 is subsequently requested by the computing device 46, the computing device 46 can receive an updated version of the container image 20.

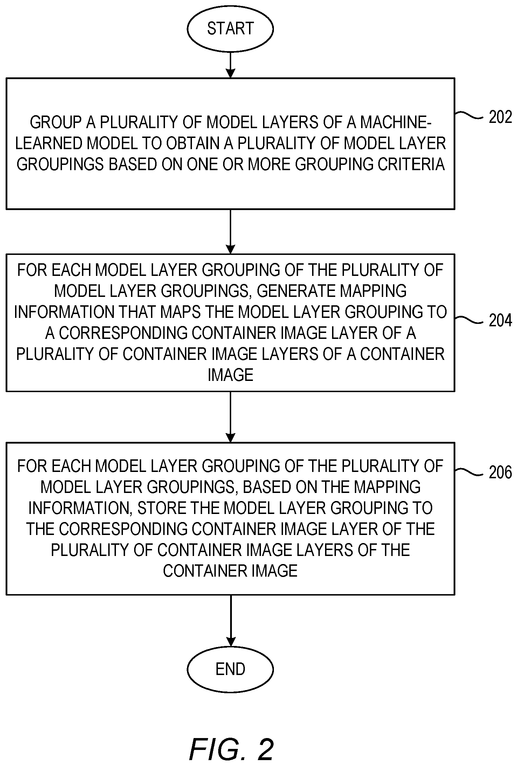

Figure 2 is a flowchart illustrating operations performed by the computing device of Figure 1A for constructing container image layers based on neural network model layers, according to one example. Figure 2 will be discussed in conjunction with Figure 1A. More specifically, the computing system 12 can group a plurality of model layers 22 of a machine-learned model 24 to obtain a plurality of model layer groupings 34 based on one or more grouping criteria 30 (block 202). The computing system can 12 can generate, for each of the model layer groupings 34, mapping information 32 that maps the model layer groupings 34 to a plurality of container image layers 22 of a container image 20 (block 204). The computing system 12 can, based on the mapping information 32, store the model layer groupings 34 to the container image layers 22 (block 206).

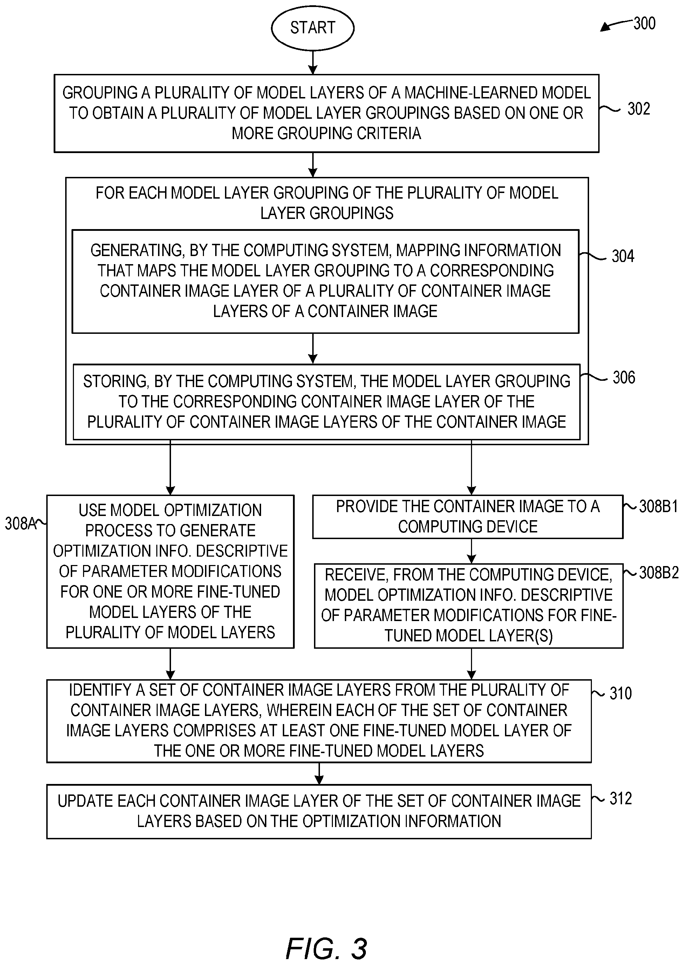

Figure 3 is a flowchart for a method 300 for constructing container image layers based on neural network model layers according to some implementations of the present disclosure. Although Figure 3 depicts steps performed in a particular order for purposes of illustration and discussion, the methods of the present disclosure are not limited to the particularly illustrated order or arrangement. The various steps of the method 300 can be omitted, rearranged, combined, and/or adapted in various ways without deviating from the scope of the present disclosure.

At 302, a computing system can group a plurality of model layers of a machine-learned model to obtain a plurality of model layer groupings based on one or more grouping criteria. In some implementations, the one or more grouping criteria can include a model layer type criteria. To group the plurality of model layers of the machine-learned model to obtain the plurality of model layer groupings, the computing system can determine a model layer type for each model layer of the machine-learned model. In some implementations, the computing system can group the plurality of model layers based on the model layer type of each of the plurality of model layers to obtain the plurality of model layer groupings. In some implementations, the model layer type can include a self-attention layer type, a convolutional layer type, a normalization layer type, an activation layer type, or a hidden layer type. In some implementations, the machine-learned model can be, or otherwise include, a neural network

In some implementations, the one or more grouping criteria can include a computational complexity criteria. Grouping the plurality of model layers of the machine-learned model to obtain the plurality of model layer groupings can include determining a degree of computational complexity associated with each model layer of the machine-learned model. The computing system can group the model layers based on the degree of computational complexity associated with each of the plurality of model layers to obtain the plurality of model layer groupings.

In some implementations, the one or more grouping criteria can include a layer quantity criteria. To group the plurality of model layers of the machine-learned model to obtain the plurality of model layer groupings, the computing system can make a determination that a number of model layers included in the machine-learned model is greater than a number of container image layers included in the container image. Based on the determination, the computing system can group the plurality of model layers based on the number of container image layers included in the container image to obtain the plurality of model layer groupings. The plurality of model layer groupings can include a number of model layer groupings equal to the number of container image layers included in the container image.

At 304, the computing system can, for each model layer grouping of the plurality of model layer groupings, generate mapping information that maps the model layer grouping to a corresponding container image layer of a plurality of container image layers of a container image.

At 306, the computing system can, for each model layer grouping of the plurality of model layer groupings, the computing system can, for each model layer grouping of the plurality of model layer groupings, store the model layer grouping to the corresponding container image layer of the plurality of container image layers of the container image based on the mapping information.

At 308A, in some implementations, the computing system can use a model optimization process to generate optimization information. The optimization information can describe parameter modifications for one or more fine-tuned model layers of the plurality of model layers.

In some implementations, the computing system can obtain the optimization information descriptive of the parameter modifications for one or more fine-tuned model layers of the plurality of model layers of the machine-learned model. For example, the computing system can determine the optimization information based on a training example. For another example, the computing system can obtain the parameter modification information from the computing device based on a training example observed locally at the computing device. In some implementations, the computing system can apply the parameter modifications to the one or more fine-tuned model layers of the plurality of model layers of the machine-learned model.

Alternatively, at 308B1, in some implementations, to obtain the optimization information descriptive of the parameter modifications, the computing system can provide the container image to a computing device.

At 308B2, in some implementations, the computing system can obtain or receive, from the computing device, the optimization information descriptive of the parameter modifications for the one or more fine-tuned model layers of the plurality of model layers of the machine-learned model. For example, the optimization information can be calculated locally at the computing device based on a local training example.

At 310, in some implementations, the computing system can identify a set of container image layers from the plurality of container image layers. Each of the set of container image layers can include at least one fine-tuned model layer of the one or more fine-tuned model layers.

At 312, in some implementations, the computing system can update each container image layer of the set of container image layers based on the optimization information, in some implementations, the computing system can provide the set of container image layers to the computing device. The computing device can load the set of container image layers to cache.

Specifically, in some implementations, the computing system can apply parameter modifications to one or more model layers of the plurality of model layers of the machine-learned model to obtain one or more fine-tuned model layers. The computing system can provide update information to a computing device that previously requested the container image from the computing system. The update information can include the one or more fine-tuned model layers and instructions to update a container image previously requested by the computing device with the one or more fine-tuned model layers.

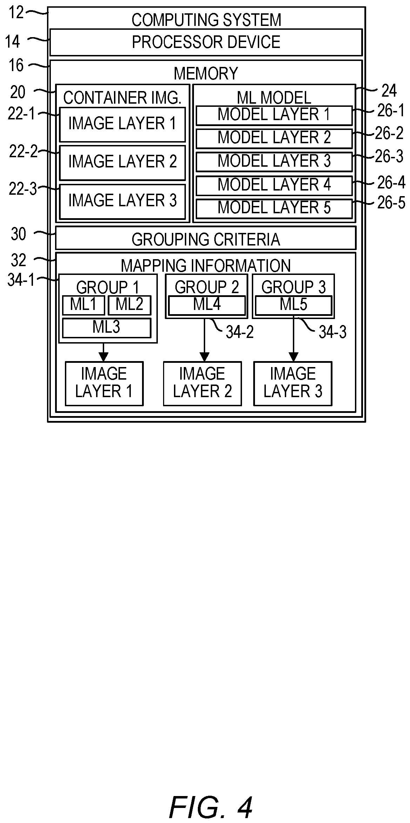

Figure 4 is a block diagram of the computing device of Figure 1A for constructing container image layers based on machine-learned model layers, according to one example. Elements of Figure 1A are referenced in describing Figure 4 for the sake of clarity. In the example of Figure 4, the computing system 12 includes a memory 16 and processor device(s) 14 coupled to the memory 16. The processor device(s) 14 are to group a plurality of model layers 26 of a machine-learned model 24 to obtain a plurality of model layer groupings 34 based on one or more grouping criteria 30. The processor device(s) 14 are further to generate, for each of the model layer groupings 34, mapping information 32 that maps the model layer groupings 34 to corresponding container image layers of a plurality of image layers 22 of a container image 20. The processor device(s) 14 are further to store, for each of the model layer groupings 34 based on the mapping information 32, the model layer groupings 34 to the corresponding image layers 22 of the container image 20.

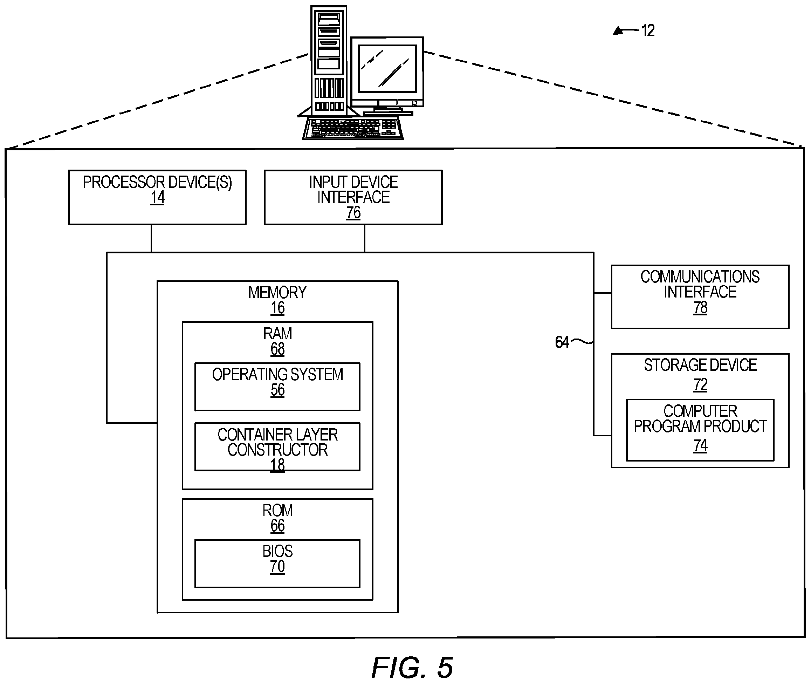

Figure 5 is a block diagram of the computing system 12 suitable for implementing examples according to one example. The computing system 12 may comprise any computing or electronic device capable of including firmware, hardware, and/or executing software instructions to implement the functionality described herein, such as a computer server, a desktop computing device, a laptop computing device, a smartphone, a computing tablet, or the like. The computing system 12 includes the processor device(s) 14, the memory 16, and a system bus 64. The system bus 64 provides an interface for system components including, but not limited to, the memory 16 and the processor device(s) 14. The processor device(s) 14 can be any commercially available or proprietary processor.

The system bus 64 may be any of several types of bus structures that may further interconnect to a memory bus (with or without a memory controller), a peripheral bus, and/or a local bus using any of a variety of commercially available bus architectures. The memory 16 may include non-volatile memory 66 (e.g., read-only memory (ROM), erasable programmable read-only memory (EPROM), electrically erasable programmable read-only memory (EEPROM), etc.), and volatile memory 68 (e.g., random-access memory (RAM)). A basic input/output system (BIOS) 70 may be stored in the non-volatile memory 66 and can include the basic routines that help to transfer information between elements within the computing system 12. The volatile memory 68 may also include a high-speed RAM, such as static RAM, for caching data.

The computing system 12 may further include or be coupled to a non-transitory computer-readable storage medium such as the storage device 72, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 72 and other drives associated with computer-readable media and computer-usable media may provide non-volatile storage of data, data structures, computer-executable instructions, and the like.

A number of modules can be stored in the storage device 72 and in the volatile memory 68, including an operating system and one or more program modules, such as the container layer constructor 18, which may implement the functionality described herein in whole or in part. All or a portion of the examples may be implemented as a computer program product 74 stored on a transitory or non-transitory computer-usable or computer-readable storage medium, such as the storage device 72, which includes complex programming instructions, such as complex computer-readable program code, to cause the processor device(s) 14 to carry out the steps described herein. Thus, the computer-readable program code can comprise software instructions for implementing the functionality of the examples described herein when executed on the processor device(s) 14. The processor device(s) 14, in conjunction with the container layer constructor 18 in the volatile memory 68, may serve as a controller, or control system, for the computing system 12 that is to implement the functionality described herein.

Because the container layer constructor 18 is a component of the computing system 12, functionality implemented by the container layer constructor 18 may be attributed to the computing system 12 generally. Moreover, in examples where the container layer constructor 18 'comprises software instructions that program the processor device(s) 14 to carry out functionality discussed herein, functionality implemented by the container layer constructor 18 may be attributed herein to the processor device(s) 14.

An operator, such as a user, may also be able to enter one or more configuration commands through a keyboard (not illustrated), a pointing device such as a mouse (not illustrated), or a touch-sensitive surface such as a display device. Such input devices may be connected to the processor device(s) 14 through an input device interface 76 that is coupled to the system bus 64 but can be connected by other interfaces such as a parallel port, an Institute of Electrical and Electronic Engineers (IEEE) 1394 serial port, a Universal Serial Bus (USB) port, an IR interface, and the like. The computing system 12 may also include the communications interface 78 suitable for communicating with the network as appropriate or desired. The computing system 12 may also include a video port configured to interface with the display device, to provide information to the user.

Individuals will recognize improvements and modifications to the preferred examples of the disclosure. All such improvements and modifications are considered within the scope of the concepts disclosed herein and the claims that follow.

## Claims

1. A method, comprising:
grouping, by a computing system comprising one or more processor devices, a plurality of model layers of a machine-learned model to obtain a plurality of model layer groupings based on one or more grouping criteria; and
for each model layer grouping of the plurality of model layer groupings:
generating, by the computing system, mapping information that maps the model layer grouping to a corresponding container image layer of a plurality of container image layers of a container image; and
based on the mapping information, storing, by the computing system, the model layer grouping to the corresponding container image layer of the plurality of container image layers of the container image.

2. The method of claim 1, further comprising:
obtaining, by the computing system, optimization information descriptive of parameter modifications for one or more fine-tuned model layers of the plurality of model layers of the machine-learned model; and
applying, by the computing system, the parameter modifications to the one or more fine-tuned model layers of the plurality of model layers of the machine-learned model.

3. The method of claim 2, wherein the optimization information is further descriptive of one or more modifications to a configuration of the machine-learned model.

4. The method of claim 2, wherein the method further comprises:
identifying, by the computing system, a set of container image layers from the plurality of container image layers, wherein each of the set of container image layers comprises at least one fine-tuned model layer of the one or more fine-tuned model layers.

5. The method of claim 4, wherein obtaining the optimization information descriptive of the parameter modifications comprises:
providing, by the computing system, the container image to a computing device; and
obtaining, by the computing system from the computing device, the optimization information descriptive of the parameter modifications for the one or more fine-tuned model layers of the plurality of model layers of the machine-learned model.

6. The method of claim 5, wherein the method further comprises:
updating, by the computing system, each container image layer of the set of container image layers based on the optimization information; and
providing, by the computing system, the set of container image layers to the computing device.

7. The method of claim 1, wherein the one or more grouping criteria comprises a model layer type criteria, and wherein grouping the plurality of model layers of the machine-learned model to obtain the plurality of model layer groupings comprises:
determining, by the computing system, a model layer type for each model layer of the machine-learned model; and
grouping, by the computing system, the plurality of model layers based on the model layer type of each of the plurality of model layers to obtain the plurality of model layer groupings.

8. The method of claim 7, wherein the model layer type comprises:
a self-attention layer type;
a convolutional layer type;
a normalization layer type;
an activation layer type; or
a hidden layer type.

9. The method of claim 1, wherein the one or more grouping criteria comprises a computational complexity criteria, and wherein grouping the plurality of model layers of the machine-learned model to obtain the plurality of model layer groupings comprises:
determining, by the computing system, a degree of computational complexity associated with each model layer of the machine-learned model; and
grouping, by the computing system, the plurality of model layers based on the degree of computational complexity associated with each of the plurality of model layers to obtain the plurality of model layer groupings.

10. The method of claim 1, wherein the machine-learned model comprises a neural network.

11. A computing system comprising one or more processor devices configured to carry out the method of any of claims 1 to 10.

12. A non-transitory computer-readable storage medium that includes executable instructions that when executed cause one or more processor devices to carry out the method of any of claims 1 to 10.
